# EUROPÄISCHE PATENTSCHRIFT

(11) **EP 0 908 420 B1**
(45) Veröffentlichungstag und Bekanntmachung des Hinweises auf die Patenterteilung: **22.11.2000**
(21) Anmeldenummer: 98114421.5
(22) Anmeldetag: 31.07.1998
(51) Int. Cl.: C03C 8/02, C03C 4/02, C03C 8/04

(54) **Kobalthaltige keramische Dekorfarbe und ihre Verwendung**
Cobalt containing ceramic decoration paint and its use
Couleur décorative céramique contenant du cobalt et son utilisation

(30) Priorität: 10.10.1997 DE 19744803
(43) Veröffentlichungstag der Anmeldung: 14.04.1999
(73) Patentinhaber: W.C. Heraeus GmbH & Co. KG, 63450 Hanau (DE)
(72) Erfinder: Ernst, Ingrid, 63517 Rodenbach (DE); Nadler, Jean-Pierre Dr., 66663 Merzig (DE); Widhalm, Andreas, 2442 U. Waltersdorf (AT)
(74) Vertreter: Kühn, Hans-Christian

(56) Entgegenhaltungen:
- WO-A-95/09131
- US-A- 3 547 098

## Beschreibung

Die Erfindung betrifft eine keramische Dekorfarbe aus einer SiO₂ und CoO enthaltenden Glasfritte und ihre Verwendung.

Die Erfindung betrifft besonders eine keramische Dekorfarbe zum Dekorieren von Porzellan, Steingut und Bone China in Unterglasur- und Inglasur-Technik zur Erzeugung intensiv kobaltblauer Dekorationen, wobei die Inglasur-Technik bevorzugt wird.

Die Dekoration mit keramischen Farben ist besonders bei Geschirrporzellan weit verbreitet. Sie kann durch Einfärben der Porzellanmassen mit keramischen Farbkörpern bzw. Pigmenten oder durch Aufbringen von keramischen Farben - das sind Mischungen aus den keramischen Farbkörpern bzw. Pigmenten und sich fest mit der Unterlage verbindenden bzw. als Bindemittel wirkenden Glasfritten oder Glasflüssen - auf die zu dekorierenden Gegenstände in Unterglasur-, Inglasur- oder Aufglasur-Technik erfolgen. Entsprechend werden je nach Art des Aufbringens keramische Unterglasur-, Inglasur- und Aufglasurfarben unterschieden. Aufglasurfarben werden bei niedrigeren Temperaturen eingebrannt als Unterglasur- und Inglasurfarben.

Die Blaufärbung und -dekoration von Keramik, Glas und Email durch Kobalt-Farbkörper - Kobaltoxid und Mischoxide des Kobalts (CoAl₂O₄, Co₂SiO₄) - gehört zu den ältesten farbgebenden keramischen Dekorationen. Mischungen der Kobalt-Farbkörper mit geeigneten Glasflüssen sind als Unterglasur- oder Aufglasurfarben für die Dekoration von Porzellan bekannt. Das die Kobaltfarbe bildende Kobaltoxid liegt in der Glasur bzw. Glasfritte in ionischer Form vor; so werden Farbton und -intensität anders als zum Beispiel beim Eisen nicht durch die Brennatmosphäre beeinflußt, sondern durch die Glaszusammensetzung und die Kobalt-Konzentration. Bei höheren Temperaturen, wie sie beispielsweise bei der Dekoration mit Unterglasur- und Inglasurfarben erforderlich sind. können als ein Ausbluten des Kobalts ("cobalt bleeding") bezeichnete Fehler auftreten, deren Ursache die Diffusion des Kobalts in die Glasur ist.

Beispiele für aus Mischungen der Farbkörper mit Glasfritten bestehende keramische Farben stellen die aus EP 0 606 592 A bekannten fließfähigen, chemisch resistenten Farbgranulate hoher Farbstärke und Brillanz dar, die 20 - 94,8 Gewichts-% anorganische Farbkörper und/oder Pigmente, 5 - 75 Gewichts-% Fritten und/oder Gläser und 0,2 - 20 Gewichts-% anorganische und/oder organische Bindemittel aufweisen. Zur Herstellung der Farbgranulate werden die Granulatkomponenten zunächst ohne Bindemittel miteinander vermischt, dann - nach Zusatz des Bindemittels - granuliert, zwischen 120 und 1200 °C, vorzugsweise bei 150 - 350 °C, getempert und gegebenenfalls klassiert. Die Farbgranulate, deren mittlere Korngröße 5 - 25 Mikrometer beträgt, können zum Einfärben von Emaillierungen, Glasuren, keramischen Schichten, Gläsern usw. eingesetzt werden. Als Beispiele für die Farbkörper werden neben zahlreichen anderen auch Kobaltoxid- und Kobalt-aluminium-oxid-Blau genannt.

Als keramische Farben sind auch schon Kobaltoxid enthaltende Gläser beziehungsweise Glasfritten vorgeschlagen worden.

So wird zum Beispiel in US 4 892 847 A eine niedrigschmelzende blei- und cadmiumfreie Glasfritte, die SiO₂, Bi₂O₃, B₂O₃, Alkalimetalloxid, ZrO₂ und/oder TiO₂ und gegebenenfalls bis zu 15 Gewichts-% CoO enthält, beschrieben. Die Glasfritte kann durch Schmelzen (1000 - 1300 °C) von zur Bildung der Oxide geeigneten Rohstoff-Gemischen und Fritten der erzeugten Schmelzen, zum Beispiel durch Einlaufenlassen in Wasser, hergestellt werden. Falls erforderlich, kann sich noch das Mahlen zu einem Pulver anschließen. Durch Dispergieren der Glasfritte in einem organischen Medium (Pine Oil) lassen sich Pasten zubereiten, die zum Beispiel in Siebdruck-Technik auf die zu dekorierenden Gegenstände aufgebracht werden können. Die Glasfritte eignet sich zum Überziehen und Dekorieren von Glas, Glaskeramik, Porzellan und Keramik. Die Überzüge und Dekorationen sind beständig gegen Säuren und alkalische Detergentien (Geschirrspülmittel).

In WO 95/09131 A1 werden blei- und cadmiumfreie Kobaltoxid-Gläser vorgeschlagen, die als Aufglasurfarben zu sowohl intensiv königsblauen als auch chemisch beständigen Dekorationen führen, was mit den bekannten Aufglasurfarben aus kristallinen CoO-ZnO-SiO₂-Pigmenten und bleihaltigen oder bleifreien Glasflüssen nicht möglich ist. Die Gläser, auch als Glasfritten bezeichnet, bestehen aus 30 - 70 Gewichts-% SiO₂, 1 - 25 Gewichts-% B₂O₃, 0 - 10 Gewichts-% Al₂O₃, 0 - 50 Gewichts-% Bi₂O₃, 0,1 - 30 Gewichts-% CoO, 1 - 30 Gewichts-% Alkalimetalloxid (Li₂O, Na₂O und/oder K₂O), 0 - 15 Gewichts-% MgO, CaO, SrO und/oder BaO, 0,1 - 20 Gewichts-% ZnO, bis zu 10 Gewichts-% ZrO₂, 0 - 1 Gewichts-% TiO₂, 0 - 5 Gewichts-% SnO₂, WO₃, MoO₃ und/oder Nb₂O₃, 0 - 5 Gewichts-% Y₂O₃, La₂O₃ und/oder CeO₂ und 0 - 5 Gewichts% P₂O₅. Die Gläser können nichtkristallisierend ("stabil") sein und weisen dann vorzugsweise einen ZnO-Gehalt von 1 - 5, besonders von 1 - 3, Gewichts-% und einen CoO-Gehalt von 10 - 20, besonders von 10 - 15, Gewichts-% auf. Kristallisierende Gläser, die aufgrund der Ausscheidung der (Co, Zn)₂SiO₄-Phase intensivere Blaufärbungen bewirken, weisen vorzugsweise einen ZnO-Gehalt von 5 - 15, besonders von 7 - 12, Gewichts-% und einen CoO-Gehalt von 5 - 15. besonders von 5 - 12. Gewichts-%, auf. Die Ausscheidung der (Co, Zn)₂SiO₄-Phase tritt während des Einbrennens der Aufglasurfarbe ein oder wird durch eine vorangehende thermische Behandlung der Gläser erzielt. Die Glaszusammensetzungen können durch Mischen der ihnen zugrunde liegenden Oxide in feinteiliger Form oder von sich thermisch zu den Oxiden zersetzenden Verbindungen, Schmelzen der erhaltenen Mischungen in einem Glasschmelzofen, Fritten der Glasschmelzen, zum Beispiel durch Eingießen in Wasser, und - falls erforderlich - Mahlen der Fritten, hergestellt werden. Das Schmelzen und Fritten erfolgt vorzugsweise in oxidierender Atmosphäre oder in Gegenwart sauerstoffreicher Verbindungen. Die Glaszusammensetzungen lassen sich zu druckbaren Pasten verarbeiten und für die üblichen Dekorationsverfahren und zur Herstellung von keramischen Abziehbildern einsetzen. Sie eignen sich, gegebenenfalls im Gemisch mit anorganischen Füllstoffen, zum Dekorieren von Bone China, Fine China, Steingut und Porzellan. Die erhaltenen Dekorationen sind gegenüber Säuren und Alkalien beständig. Ihr blauer Farbton wird durch L ("lightness", Helligkeit) = 30 - 80, C ("intensity", Chroma, Sättigung) = 10 - 50 und H ("hue", Buntheit) = 255 - 300 charakterisiert.

Der Erfindung liegt die Aufgabe zugrunde, eine aus einer SiO₂ und CoO enthaltenden Glasfritte bestehende keramische Dekorfarbe zur Kobaltblaufärbung von Keramik und Porzellan zu finden, die blei- und cadmiumfrei ist und sich besonders zur Dekoration von Porzellan, Steingut und Bone China in Unterglasur- und Inglasur-Technik eignet. Mit der Dekorfarbe sollen sich intensiv kobaltblaue Dekorationen, die frei von kristallinen Ausscheidungen sind und eine sehr gute Beständigkeit gegenüber Säuren und Alkalien besitzen, erzeugen lassen.

Die die Lösung der Aufgabe darstellende keramische Dekorfarbe aus einer Glasfritte ist erfindungsgemäß dadurch gekennzeichnet, daß die Glasfritte aus
15 - 40 Gewichts-% SiO₂,
5 - 15 Gewichts-% B₂O₃,
1 - 10 Gewichts-% Al₂O₃,
1 - 10 Gewichts-% Li₂O,
0 - 9 Gewichts-% Na₂O,
0 - 9 Gewichts-% K₂O,
1 - 15 Gewichts-% MgO, CaO, SrO und/oder BaO,
0 - 5 Gewichts-% V₂O₅,
0 - 10 Gewichts-% ZnO,
1 - 8 Gewichts-% ZrO₂ und
35 - 55 Gewichts-% CoO
besteht und der Gesamt-Gehalt an Li₂O, Na₂O und K₂O 10 Gewichts-% nicht überschreitet.

Besonders bewährt hat sich die Dekorfarbe aus einer Glasfritte aus
20 - 30 Gewichts-% SiO₂,
7 - 12 Gewichts-% B₂O₃,
3 - 6 Gewichts-% Al₂O₃,
2 - 5 Gewichts-% Li₂O,
5 - 15 Gewichts-% CaO, SrO und/oder BaO,
3 - 6 Gewichts-% ZrO₂ und
38 - 50 Gewichts-% CoO.

Die erfindungsgemäße Dekorfarbe stellt eine gefärbte Glasfritte dar. Ihre Herstellung erfolgt in an sich bekannter Weise aus die Bestandteile der Dekorfarbe bildenden, pulverförmigen Glasrohstoffen. Das können Oxide und Hydroxide, wie Quarz, Borsäure, Zinkoxid und Aluminiumhydroxid, Carbonate, wie Lithium-, Barium- und Kobaltcarbonat, und Silicate, wie Natriumaluminiumsilicat (Albit), Kaliumaluminiumsilicat (Orthoklas) und Zirkoniumsilicat, sein. Die Glasrohstoffe werden in einer Menge, die dem Anteil der Bestandteile der Dekorfarbe entspricht, eingesetzt. Homogene Gemische der Glasrohstoffe werden in einem Glasschmelzofen bei 1100 - 1300 °C geschmolzen, die erhaltenen Schmelzen abgeschreckt und anschließend zu Pulvern vermahlen. Für die erfindungsgemäße Dekorfarbe hat sich eine Korngrößenverteilung von 90 % ≤ 12 Mikrometer besonders bewährt.

Die erfindungsgemäße Dekorfarbe weist einen höheren CoO-Gehalt als die vorbekannten CoO-Gläser und -Glasfritten auf. Überraschend ist, daß trotz des hohen CoO-Gehaltes die Dekorfarbe sehr gute anwendungstechnische Eigenschaften besitzt und beim Brennen keine Rekristallisationen auftreten. Mit der erfindungsgemäßen Dekorfarbe lassen sich besonders auf Porzellan, Steingut und Bone China ästhetisch sehr ansprechende kobaltblaue Dekorationen mit hoher Farbintensität und Homogenität und hohem Glanz erzeugen. Die durch Farbmessung bestimmten Werte für die Farbsättigung (C-Werte) und die Buntheit (H-Werte) entsprechen denen des klassischen Kobaltsblaus. Die Dekorationen sind konturenscharf, ein Ausbluten des Kobalts wird nicht beobachtet. Ihre chemische Beständigkeit, besonders gegenüber Säuren und Alkalien (alkalische Detergentien, Geschirrspülmittel), ist sehr gut.

Die erfindungsgemäße Dekorfarbe wird als Unterglasurfarbe und vorzugsweise als Inglasurfarbe eingesetzt. Mit Inglasurfarben dekoriertes Porzellan ist wegen seiner chemischen und mechanischen Beständigkeit besonders für das Hotelgewerbe attraktiv. Die Brenntemperaturen für mit der erfindungsgemäßen Dekorfarbe dekorierte Gegenstände hängen von der Art der die Gegenstände bildenden Materialien ab. Sie betragen bei der Inglasur-Technik etwa 1150 - 1280 °C, bei der Unterglasur-Technik etwa 950 - 1250 °C.

Die Dekorfarbe wird entweder in fester Form oder in Form von Pasten oder Flüssigkeiten, die durch Vermischen mit organischen Anmachmitteln beziehungsweise Druckmedien erhalten werden, eingesetzt. Sie kann in allgemein üblichen Auftragsarten auf die zu dekorierenden Gegenstände aufgebracht werden, auf direktem Wege zum Beispiel durch Bemalen, Sprühen oder Drucken, indirekt durch Übertragen von Abziehbildern, deren Bildschichten aus der Dekorfarbe bestehen oder diese enthalten.

Zur Modifizierung des Farbtons und der Farbintensität können der Dekorfarbe keramische Farbkörper (Pigmente) und farblose Glasfritten beigefügt werden.

Zur näheren Erläuterung werden in den folgenden Beispielen keramische Dekorfarben gemäß der Erfindung (Beispiele 1 - 3), die Herstellung von Abziehbildern daraus (Beispiel 4), die Dekoration von Porzellan in Inglasur-Technik (Beispiel 5), die Bestimmung des Farbtons (Beispiel 6), die Prüfung der Beständigkeit gegenüber Säuren (Beispiel 7) und alkalischen Detergentien (Beispiel 8) und die Prüfung der Spülmaschinenbeständigkeit (Beispiel 9) beschrieben.

### Beispiel 1

Aus 132 g Quarzmehl, 91 g Borsäure, 29 g Aluminiumhydroxid, 21 g Zinkoxid, 44 g Lithiumcarbonat, 34 g Zirkoniumsilicat, 62 g Bariumcarbonat und 176 g Kobaltoxid wird durch 10 Minuten langes Mischen (Eirich-Mischer) ein homogenes Gemisch erzeugt. Dann wird das Gemisch in einen Tiegel gefüllt, in einem Glasschmelzofen bei etwa 1150 °C geschmolzen und nach 1,5 Stunden die Schmelze unter Bildung von Granulaten in Wasser eingegossen. Die Granulate werden zunächst trocken zerkleinert (Backenbrecher) und anschließend unter Zusatz von Spiritus in einer Topfmühle zu einer Dekorfarbe (Korngrößenverteilung: 90 % ≤ 12 Mikrometer) der in der Tabelle 1 angegebenen Zusammensetzung vermahlen.

### Beispiele 2 und 3

Entsprechend der in Beispiel 1 beschriebenen Weise werden weitere Dekorfarben gemäß der Erfindung hergestellt. Ihre Zusammensetzung wird in der Tabelle I angegeben.

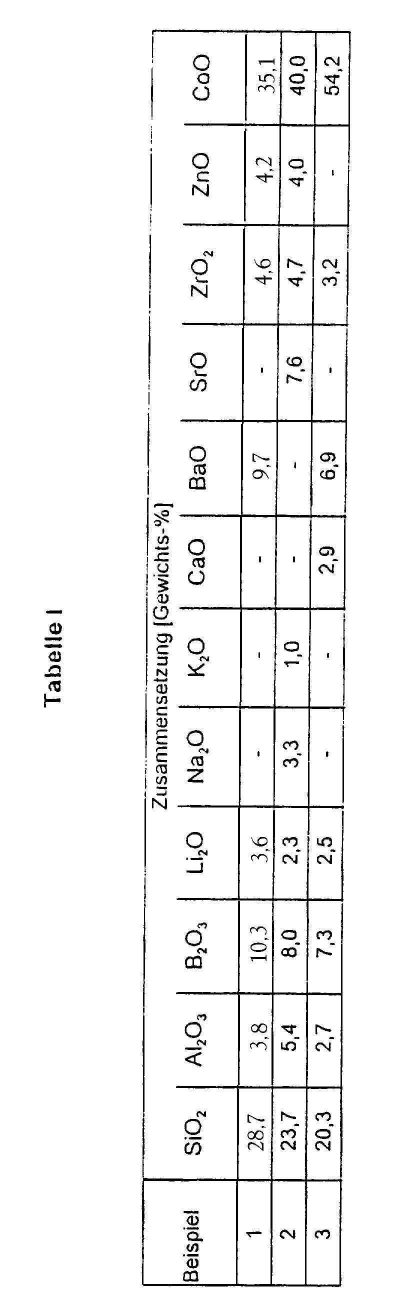

### Beispiel 4

Die Dekorfarben gemäß den Beispielen 1 - 3 und ein handelsübliches Siebdrucköl werden im Gewichtsverhältnis 2 : 1 unter Bildung von Dekorpasten miteinander vermischt. Auf Trägerpapier (Transferpapier), ein mit einer wasserlöslichen Schicht versehenes Papier für keramische Abziehbilder, werden durch ein aus Polyestergewebe, Faserstärke T, bestehendes Sieb mit 100 Maschen/cm jeweils eine der Dekorpasten enthaltende Bildschichten gedruckt. Nach dem Trocknen werden auf die Bildschichten aus einem Siebdrucklack bestehende Lackschichten ebenfalls im Siebdruckverfahren aufgedruckt und durch Liegenlassen bei Raumtemperatur die Lackschichten getrocknet.

### Beispiel 5

Die nach Beispiel 4 gefertigten Abziehbilder werden in Wasser eingeweicht, um das Trägerpapier (Transferpapier) abzulösen. Dann werden die Lackschichten mit den darauf befindlichen Bildschichten auf glasierte und gebrannte Porzellanteller übertragen und beide - die Lackschichten und die damit auf den Porzellantellern fixierten Bildschichten - mit dem Rakel glattgestrichen und getrocknet. Anschließend werden die Porzellanteller in einem elektrisch beheizten Laborofen bei 1220 °C (5 Minuten Haltezeit) gebrannt. Die erhaltenen intensiv kobaltblauen, glänzenden Dekorationen sind frei von Rekristallisationen; lediglich in der mit der Dekorfarbe nach Beispiel 3 erzeugten Dekoration ist eine beginnende kristalline Ausscheidung zu erkennen.

### Beispiel 6

Die Bestimmung des Farbtons der kobaltblauen Dekorationen auf den nach Beispiel 5 dekorierten Porzellantellern erfolgt mit dem Farbmeßgerät SPM 100 II der Firma GRETAG, Regensdorf, Schweiz. Die gemessenen L-, C- und H-Werte werden in der Tabelle II angegeben.

### Beispiel 7

Die nach Beispiel 5 dekorierten Porzellanteller werden bei Raumtemperatur 24 Stunden lang im Dunkeln der Einwirkung von
a) 4 %iger Essigsäure (pH 3) und
b) 3 %iger Salzsäure (pH 1)
ausgesetzt, dann mit klarem Wasser gespült, getrocknet und im Hinblick auf mögliche Dekorschäden visuell geprüft. Das Ergebnis der Prüfung wird in der Tabelle II angegeben.

### Beispiel 8

Die nach Beispiel 5 dekorierten Porzellanteller werden 24 Stunden lang im Dunkeln bei 77 °C der Einwirkung eines handelsüblichen alkalischen Geschirrspülmittels (1 %ige "Calgonite"-Lösung, pH 13; "Calgonite": 40 Gewichts-% Natriummetasilicat, 40 Gewichts-% Natriumcarbonat und 20 Gewichts-% Natriumtripolyphosphat) ausgesetzt, dann mit klarem Wasser gespült, getrocknet und im Hinblick auf mögliche Dekorschäden visuell geprüft. Das Ergebnis der Prüfung wird in der Tabelle II angegeben.

### Beispiel 9

Die Spülmaschinenbeständigkeit der nach Beispiel 5 dekorierten Porzellanteller wird in einem Schnellspültest geprüft. Dazu werden die Porzellanteller in einer Haushaltsspülmaschine (Miele G 540 Spezial) 60 Minuten lang mit einer 80 °C warmen wässerigen Geschirrspülmittel-Lösung, die pro Liter 12 g eines handelsüblichen alkalischen Geschirrspülmittels ("Somat", Henkel Waschmittel GmbH, Düsseldorf) enthält, behandelt. Anschließend erfolgt die Klarspülung mit der wässerigen Lösung eines handelsüblichen sauren Klarspülmittels ("Somat", Citrus-Klarspüler). Nach ohne Zwischenpause aufeinanderfolgenden 50 Spülungen (Spülcyclen), die etwa 1000 Haushaltsspülungen entsprechen, werden die Porzellanteller getrocknet und im Hinblick auf mögliche Dekorschäden visuell geprüft. Das Ergebnis der Prüfung wird in der Tabelle II angegeben.

**Tabelle II**

| | Beständigkeit | | | Farbton | | |
|---|---|---|---|---|---|---|
| Beispiel | Säuren | Alkalien | Spülmaschinen | L | C | H |
| 1 | 0 | 0 - 1 | 1 | 12,45 | 60,60 | 304,72 |
| 2 | 0 | 0 | 0 | 9,28 | 53,54 | 303,57 |
| 3 | 0 | 0 | 0 - 1 | 6,67 | 46,89 | 303,23 |

0 = kein Veränderung
1 = Irisieren der Dekoroberfläche, geringer Glanzverlust
2 = Mattierung der Dekoroberfläche
3 = tiefer gehende Farbveränderung
4 = Entfernung der Farbe, vollständiges oder teilweises Freiliegen des Untergrunds

## Patentansprüche

1. Keramische Dekorfarbe aus einer SiO₂ und CoO enthaltenden Glasfritte, dadurch gekennzeichnet, daß die Glasfritte aus
15 - 40 Gewichts-% SiO₂,
5 - 15 Gewichts-% B₂O₃,
1 - 10 Gewichts-% Al₂O₃,
1 - 10 Gewichts-% Li₂O,
0 - 9 Gewichts-% Na₂O,
0 - 9 Gewichts-% K₂O,
1 - 15 Gewichts-% MgO, CaO, SrO und/oder BaO,
0 - 5 Gewichts-% V₂O₅,
0 - 10 Gewichts-% ZnO,
1 - 8 Gewichts-% ZrO₂ und
35 - 55 Gewichts-% CoO
besteht und der Gesamt-Gehalt an Li₂O, Na₂O und K₂O 10 Gewichts-% nicht überschreitet.

2. Dekorfarbe nach Anspruch 1, dadurch gekennzeichnet, daß die Glasfritte aus
20 - 30 Gewichts-% SiO₂,
7 - 12 Gewichts-% B₂O₃,
3 - 6 Gewichts-% Al₂O₃,
2 - 5 Gewichts-% Li₂O,
5 - 15 Gewichts-% CaO, SrO und/oder BaO,
3 - 6 Gewichts-% ZrO₂ und
38 - 50 Gewichts-% CoO.
besteht.

3. Verwendung der Dekorfarbe nach Anspruch 1 oder 2 als Unterglasurfarbe für die Dekoration von Porzellan, Steingut und Bone China.

4. Verwendung der Dekorfarbe nach Anspruch 1 oder 2 als Inglasurfarbe für die Dekoration von Porzellan, Steingut und Bone China.

## Claims

1. Ceramic decorative colour comprising a glass frit containing SiO₂ and CoO, characterized in that the glass frit consists of
15 - 40% by weight of SiO₂,
5 - 15% by weight of B₂O₃,
1 - 10% by weight of Al₂O₃,
1 - 10% by weight of Li₂O,
0 - 9% by weight of Na₂O,
0 - 9% by weight of K₂O,
1 - 15% by weight of MgO, CaO, SrO and/or BaO,
0 - 5% by weight of V₂O₅,
0 - 10% by weight of ZnO,
1 - 8% by weight of ZrO₂ and
35 - 55% by weight of CoO
and the total content of Li₂O, Na₂O and K₂O does not exceed 10% by weight.

2. Decorative colour according to Claim 1, characterized in that the glass frit consists of
20 - 30% by weight of SiO₂,
7 - 12% by weight of B₂O₃,
3 - 6% by weight of Al₂O₃,
2 - 5% by weight of Li₂O,
5 - 15% by weight of CaO, SrO and/or BaO,
3 - 6% by weight of ZrO₂ and
38 - 50% by weight of CoO.

3. Use of the decorative colour according to Claim 1 or 2 as an underglaze colour for the decoration of porcelain, earthenware and bone china.

4. Use of the decorative colour according to Claim 1 or 2 as an in-glaze colour for the decoration of porcelain, earthenware and bone china.

## Revendications

1. Couleur décorative céramique constituée par une fritte de verre contenant SiO₂ et CoO, caractérisée en ce que la fritte de verre consiste en
15 - 40 % en masse de SiO₂,
5 - 15 % en masse de B₂O₃,
1 - 10 % en masse d'Al₂O₃,
1 - 10 % en masse de Li₂O,
0 - 9 % en masse de Na₂O,
0 - 9 % en masse de K₂O,
1 - 15 % en masse de MgO, CaO, SrO et/ou BaO,
0 - 5 % en masse de V₂O₅,
0 - 10 % en masse de ZnO,
1 - 8 % en masse de ZrO₂ et
35 - 55 % en masse de CoO
et la teneur totale en Li₂O, Na₂O et K₂O ne dépasse pas 10 % en masse.

2. Couleur décorative selon la revendication 1, caractérisée en ce que la fritte de verre consiste en
20 - 30 % en masse de SiO₂,
7 - 12 % en masse de B₂O₃,
3 - 6 % en masse d'Al₂O₃,
2 - 5 % en masse de Li₂O,
5 - 15 % en masse de CaO, SrO et/ou BaO,
3 - 6 % en masse de ZrO₂ et
38 - 50 % en masse de CoO.

3. Utilisation de la couleur décorative selon la revendication 1 ou 2 comme couleur sous la couverte pour la décoration de la porcelaine, du grès et de la porcelaine tendre anglaise.

4. Utilisation de la couleur décorative selon la revendication 1 ou 2 comme couleur dans la couverte pour la décoration de la porcelaine, du grès et de la porcelaine tendre anglaise.
